# EUROPEAN PATENT APPLICATION

(11) **EP 3 993 481 A1**
(43) Date of publication of application: **04.05.2022**
(21) Application number: 19934772.5
(22) Date of filing: 26.06.2019
(51) Int. Cl.: H04W 24/00, H04W 24/10, H04W 28/04, H04W 52/02, H04W 72/04

(54) **TERMINAL**

(71) Applicant: NTT DOCOMO, INC., Chiyoda-ku Tokyo 100-6150 (JP)
(72) Inventor: UCHINO, Tooru, Tokyo 100-6150 (JP); TAKAHASHI, Hideaki, Tokyo 100-6150 (JP)
(74) Representative: Hoffmann Eitle
(86) International application number: PCT/JP2019/025501
(87) International publication number: WO 2020/261461

(57) **Abstract**

A terminal (200) includes a control unit (250) that controls to a dormant state in which monitoring of PDCCH is not performed at least in a cell. The control unit (250) suspends transmission of a specific uplink signal using the cell in the dormant state.

## Description

### TECHNICAL FIELD

The present invention relates to a terminal that configures a dormant state.

### BACKGROUND ART

The 3rd generation partnership project (3GPP) specifies Long Term Evolution (LTE) and specifies LTE-Advanced (hereinafter, collectively referred to as LTE) for the purpose of further speeding up LTE. In addition, in the 3GPP, specifications of a succession system of LTE called 5G, new radio (NR) or the like, have been studied.

In the NR, a terminal can perform communication using a primary cell (PCell) and a secondary cell (SCell) simultaneously between the terminal and one or more radio base stations.

In the communication, the terminal can configure, for each SCell, an activated state in which a radio signal can be transmitted and received, or a deactivated state in which transmission and reception of the radio signal is suspended.

Furthermore, in the NR, it has been discussed to configure a dormant state, in addition to the activated state and the deactivated state (see Non Patent Document 1).

In the dormant state, the terminal does not monitor a physical downlink control channel (PDCCH), but transmits quality information on SCell in which the dormant state is configured, using another cell in which a physical uplink control channel (PUCCH) is configured.

In addition, in the dormant state, the terminal can transmit an uplink signal using at least a physical uplink shared channel (PUSCH).

### PRIOR ART DOCUMENT

### NON-PATENT DOCUMENT

Non Patent Document 1: 3GPP TSG RAN WG2 Meeting #106, R2-1905542, Reno, Nevada, US, May, 2019

### SUMMARY OF THE INVENTION

Generally, when the terminal transmits an uplink signal and a radio base station cannot correctly receive the uplink signal, there is a possibility that the radio base station transmits a retransmission request to the terminal.

However, in the dormant state, since the terminal does not monitor the PDCCH, the terminal cannot receive the retransmission request.

Therefore, the terminal determines that the uplink signal is successfully transmitted based on the fact that the retransmission request has not been received from the radio base station, but the radio base station may not receive the uplink signal correctly.

Therefore, the present invention has been made in view of such a situation, and an object of the present invention is to provide a terminal capable of avoiding a state mismatch in transmission results of a specific uplink signal between the terminal and a radio base station in a dormant state in which a downlink control channel is not monitored at least in a cell.

According to one aspect of the present invention, there is provided a terminal (200) including a control unit (250) that controls to a dormant state in which monitoring of a downlink control channel (PDCCH) is not performed at least in a cell (SpCell, SCell), wherein the control unit (250) suspends transmission of a specific uplink signal using the cell (SpCell, SCell) in the dormant state.

According to one aspect of the present invention, there is provided a terminal (200) including a transmitting unit (210) that transmits a specific uplink signal using a cell (SCell) in a dormant state in which monitoring of a downlink control channel (PDCCH) is not performed at least in the cell (Scell), a control unit (250) that configures another cell (PCell) in which the terminal (200) monitors a downlink control channel (PDCCH), and a receiving unit (220) that receives a retransmission request for the specific uplink signal using the another cell (PCell).

### BRIEF DESCRIPTION OF DRAWINGS

Fig. 1 is an overall schematic configuration diagram of a radio communication system 10.
Fig. 2 is a diagram for explaining a dormant state.
Fig. 3 is a diagram for explaining switching of DL BWP in the dormant state.
Fig. 4 is a functional block configuration diagram of a terminal 200.
Fig. 5 is a diagram illustrating an operation flow (operation example 1) of the terminal 200 when uplink transmission is suspended.
Fig. 6 is a diagram illustrating an operation flow (operation example 2) of the terminal 200 when uplink transmission is suspended.
Fig. 7 is a diagram for explaining switching of UL BWP in the dormant state.
Fig. 8 is a diagram illustrating an operation flow (operation example 3) of the terminal 200 when uplink transmission is suspended.
Fig. 9 is a diagram illustrating an operation flow of the terminal 200 when uplink transmission is performed.
Fig. 10 is a diagram for explaining reception of a retransmission request in the dormant state.
Fig. 11 is a diagram for explaining operation of the terminal 200 in the dormant state according to a comparative example.
Fig. 12 is a diagram illustrating an example of a hardware configuration of the terminal 200.

### MODES FOR CARRYING OUT THE INVENTION

Hereinafter, embodiments will be described with reference to the drawings. Note that the same functions and configurations are denoted by the same or similar reference numerals, and a description thereof will be omitted as appropriate.

### (1) Overall schematic configuration of radio communication system

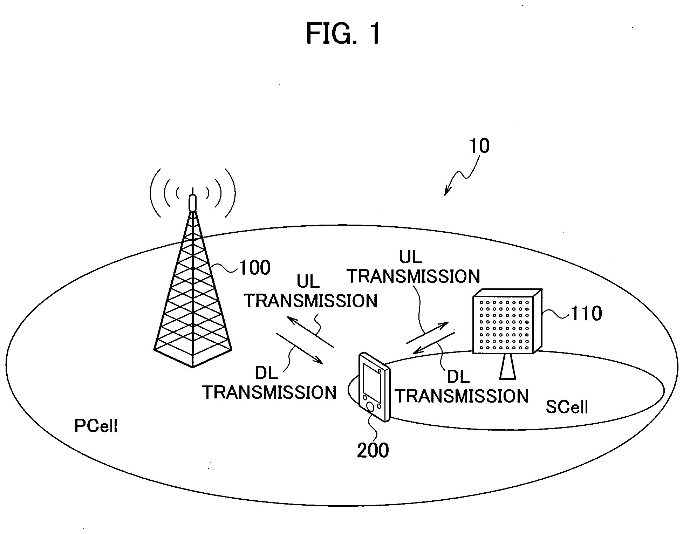

Fig. 1 is an overall schematic configuration diagram of a radio communication system 10 according to an embodiment. The radio communication system 10 is a radio communication system in accordance with 5G (NR).

As illustrated in Fig. 1, the radio communication system 10 includes radio base stations 100 and 110 and a terminal 200. The terminal 200 is also referred to as a user equipment (UE) or a media access control (MAC) entity. Note that a specific configuration of the radio communication system 10 including the number of radio base stations and the number of terminals, is not limited to the example illustrated in Fig. 1.

Each of the radio base stations 100 and 110 is a gNB or an eg-eNB, and is included in a next generation-radio access network (NG-RAN, not illustrated). The NR-RAN is connected to a core network (5GC, not illustrated) in accordance with the NR. Note that the NG-RAN and the 5GC may be simply expressed as a "network".

The radio base stations 100 and 110 perform radio communication in accordance with the NR between the radio base stations 100 and 110 and the terminal 200.

The radio base stations 100 and 110 and the terminal 200 can support a massive MIMO that generates beams with higher directivity by controlling radio signals transmitted from a plurality of antenna elements, a carrier aggregation (CA) that uses a plurality of component carriers (CCs), a dual connectivity (DC) that simultaneously transmits CCs between a plurality of NG-RAN nodes and the terminal, and the like. Note that the CC is also referred to as a carrier.

In the NR, a serving cell is classified as follows. Note that the serving cell is a cell in which a radio link is established between the terminal and the cell.

A group of serving cells associated with a radio base station (master node (MN)) that provides a control plane connected to the core network, is called a master cell group (MCG). The MCG includes a primary cell (hereinafter, referred to as PCell) and one or more secondary cells (hereinafter, referred to as SCell). The PCell is a cell used so that a terminal starts an initial connection with the MN.

A group of serving cells associated with a radio base station (secondary node (SN)) that provides additional resources to the terminal without providing the control plane connected to the core network, is called a secondary cell group (SCG). The SCG includes a primary SCell (hereinafter, referred to as PSCell) and one or more SCells. The PSCell is a cell used so that a terminal starts an initial connection with the SN.

Note that the PCell is also called a special cell (SpCell) in the MCG. In addition, PSCell is also called the SpCell in the SCG. A physical uplink control channel (PUCCH) is configured in the PCell and one SCell. For each cell group, the terminal transmits uplink control information (UCI) of each CC to the radio base station using the PCell or the SCell (PUCCH-SCell) in which the PUCCH is configured.

In the present embodiment, the radio base station 100 forms the PCell. The radio base station 110 forms the SCell. The SCell formed by the radio base station 110 is within a coverage area of the PCell formed by the radio base station 100. Note that the PCell may be formed by the radio base station 110. Note that the SCell may be formed by the radio base station 100. Moreover, one radio base station may form the PCell and the SCell.

Note that although only one SCell is illustrated in Fig. 1, the embodiment is not limited thereto, and a plurality of SCells may exist.

The terminal 200 simultaneously configures the PCell and the SCell between the terminal 200 and the radio base stations 100 and 110. The terminal 200 performs communication simultaneously using the PCell and the SCell between the terminal 200 and the radio base stations 100 and 110.

For each Scell, the terminal 200 configures an activated state in which a radio signal can be transmitted and received, or a deactivated state or a dormant state in which the transmission and reception of the radio signal is suspended.

In the activated state, the terminal 200 performs all of uplink transmission, downlink reception, and quality information report of SCell using another cell (for example, PCell) in which PUCCH is configured.

In the deactivated state, the terminal 200 does not perform all of the uplink transmission, the downlink reception, and the quality information report of the SCell using another cell (for example, PCell) in which PUCCH is configured.

In the dormant state, the terminal 200 performs the quality information report of the SCell using another cell (for example, PCell) in which PUCCH is configured, but does not perform the downlink reception. In the dormant state, as described later, there are a case where the terminal 200 performs the uplink transmission and a case where the terminal 200 does not perform the uplink transmission.

Note that the terminal 200 may perform the quality information report of the SCell using another cell in which a physical uplink shared channel (PUSCH) is configured in the activated state and the dormant state.

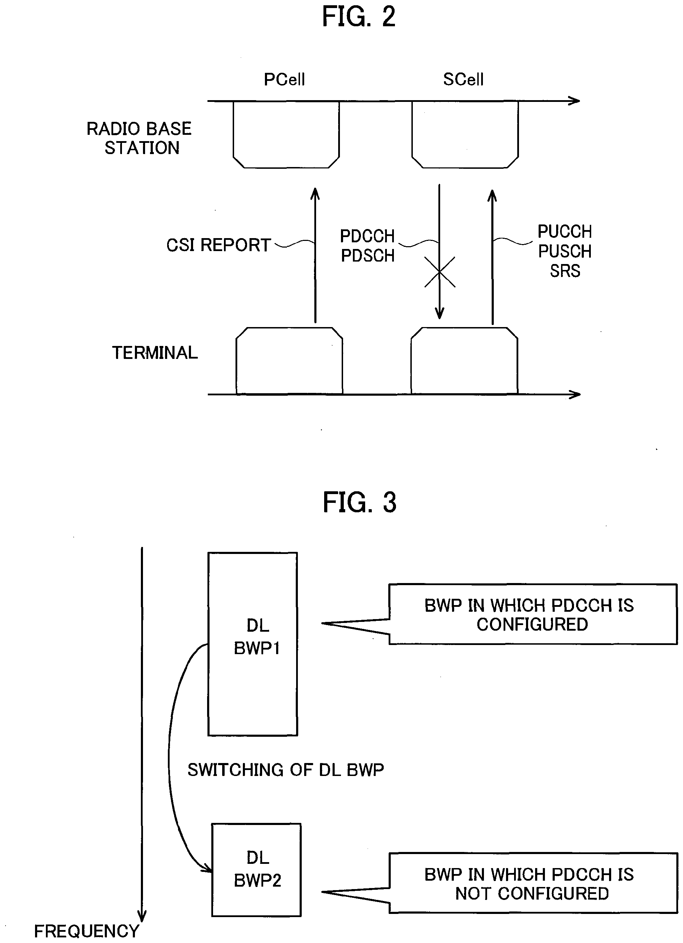

Fig. 2 is a diagram for explaining the dormant state. As illustrated in Fig. 2, in the present embodiment, the terminal 200 configures the dormant state for the SCell. Note that the terminal may configure the dormant state for the PCell and PSCell.

In the dormant state, as described later, the terminal 200 may transmit an uplink signal to the radio base station 110 using an uplink channel. In this case, examples of the uplink channel include the PUCCH, the PUSCH, and the like. In the present embodiment, the terminal 200 transmits the uplink signal (specific uplink signal) to the radio base station 110 using the PUSCH. Note that the transmission of the uplink signal in the dormant state is not limited thereto.

On the other hand, in the dormant state, as described later, the terminal 200 may suspend the transmission of the uplink signal using the uplink channel. In this case, the terminal 200 suspends the transmission of the specific uplink signal. In the present embodiment, the terminal 200 suspends the transmission of the uplink signal (specific uplink signal) using the PUSCH.

In the dormant state, the terminal 200 transmits a channel quality measurement reference signal (sounding reference signal, hereinafter referred to as SRS) to the radio base station 110. The radio base station 110 refers to the received SRS, measures an uplink quality, and estimates a downlink state based on the measurement result. The radio base station 110 performs downlink beamforming (or precoding) based on the estimation.

In the dormant state, the terminal 200 does not monitor a downlink channel or is allowed not to monitor the downlink channel. Examples of the downlink channel include a physical downlink control channel (PDCCH), a physical downlink shared channel (PDSCH), and the like. In the present embodiment, the terminal 200 does not monitor the PDCCH. Since the terminal 200 does not monitor the PDCCH, the terminal 200 cannot receive a downlink signal.

Note that the dormant state may be a state where the downlink channel is not monitored at least in the cell.

Fig. 3 is a diagram for explaining switching of DL BWP in the dormant state. As illustrated in Fig. 3, when the terminal 200 transitions to the dormant state, a downlink partial bandwidth DL BWP1 used in the SCell is switched to a downlink partial bandwidth DL BWP2 (referred to as dormant DL BWP) in which a valid PDCCH is not configured. The partial bandwidth is also referred to as an operation bandwidth of the terminal 200 in a frequency domain. The valid PDCCH means a PDCCH that is allowed (or not forbidden) to be used by a network, for example, the radio base station, or a PDCCH that satisfies a certain condition (one associated with UE capability or a UE, one that any of a frequency resource, a time resource, and a search space is not configured (invalid), or the like).

Note that the downlink partial bandwidth DL BWP2 may be a downlink partial bandwidth in which CORESET that defines the PDCCH is not configured.

Returning to Fig. 2, in the dormant state, the terminal 200 performs the quality information report of the SCell using another cell (for example, PCell) in which the PUCCH is configured. In the present embodiment, the terminal 200 transmits channel state information (CSI) of the SCell to the radio base station 100 using the PCell.

In this manner, in the dormant state, the radio base station 100 can acquire the quality information of the SCell, and therefore can activate the SCell to perform scheduling of the terminal 200 immediately. In addition, in the dormant state, since the terminal 200 does not monitor the PDCCH, the battery of the terminal 200 can be saved.

For the uplink signal transmission in the dormant state, the terminal 200 does not monitor the PDCCH, and therefore cannot receive downlink control information (DCI) to allocate uplink transmission resources. For this reason, in the dormant state, the terminal 200 transmits the uplink signal using a configured grant.

Specifically, the radio base station 100 (or radio base station 110) allocates the uplink transmission resources to the terminal 200 in advance using a radio resource control (RRC) message or the like. In the present embodiment, PUSCH resources are allocated to the terminal 200.

When the uplink signal is generated, the terminal 200 transmits the uplink signal using an uplink transmission resource previously allocated, without transmitting a scheduling request to the radio base station 100 (or radio base station 110).

Such scheduling is referred to as the configured grant.

### (2) Functional block configuration of radio communication system

Next, a functional block configuration of the radio communication system 10 will be described. Specifically, a functional block configuration of the terminal 200 will be described. Hereinafter, only portions related to the features in the present embodiment will be described. Therefore, the terminal 200 also includes other functional blocks that are not directly related to the features in the present embodiment.

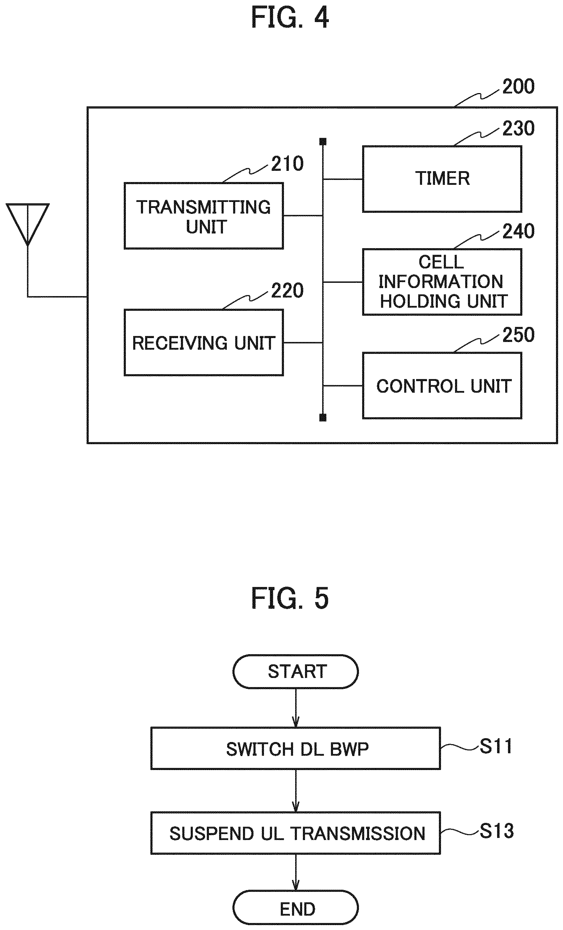

Fig. 4 is a functional block configuration diagram of the terminal 200. As illustrated in Fig. 3, the terminal 200 includes a transmitting unit 210, a receiving unit 220, a timer 230, a cell information holding unit 240, and a control unit 250.

The transmitting unit 210 transmits the uplink signal using at least one cell of the PCell and the SCell configured between the terminal 200 and the radio base stations 100 and 110. For example, in the dormant state, the transmitting unit 210 transmits the quality information of the cell in which the dormant state is configured, using another cell in which the PUCCH is configured.

The receiving unit 220 receives the downlink signal using at least one cell of the PCell and the SCell configured between the terminal 200 and the radio base stations 100 and 110. For example, in the dormant state, the receiving unit 220 receives a retransmission request from the radio base station 100 (or the radio base station 110) using a cell in which the PDCCH is configured.

The timer 230 has an uplink (UL) timer and a downlink (DL) timer. The UL timer is used to determine whether transmission of a radio signal using a cell is not performed for a predetermined period. The DL timer is used to determine whether reception of a radio signal using a cell is not performed for a predetermined period.

The cell information holding unit 240 holds information on the PCell and the SCell configured between the terminal 200 and the radio base stations 100 and 110.

The control unit 250 controls the dormant state. In the case of the dormant state, the control unit 250 suspends transmission of a specific uplink signal using the cell in which the dormant state is configured. In the case of the dormant state, the control unit 250 switches the UL BWP used in the cell, in which the dormant state is configured, to a dormant UL BWP in which an uplink channel to be described later is not configured.

In the case of the dormant state, the control unit 250 switches the DL BWP used in the cell, in which the dormant state is configured, to a dormant DL BWP in which the PDCCH is not configured. In the case of the dormant state, the control unit 250 performs the switching of the UL BWP in association with the switching of the DL BWP.

In the case of the dormant state, the control unit 250 uses the cell information holding unit 240 to configure a cell in which the terminal 200 monitors the PDCCH.

### (3) Operation of radio communication system 1

Next, an operation of the radio communication system 1 will be described. Specifically, in the dormant state, a case where the terminal 200 suspends the uplink transmission and a case where the terminal 200 performs the uplink transmission will be described.

### (3.1) Suspension of uplink transmission

In the dormant state, the terminal 200 suspends the transmission of the uplink signal using the Scell. Specifically, the terminal 200 suspends the transmission of the uplink signal (specific uplink signal) using the PUSCH.

### (3.1.1) Operation example 1

Fig. 5 is a diagram illustrating an operation flow of the terminal 200 according to operation example 1 when the uplink transmission is suspended. As illustrated in Fig. 5, the terminal 200 switches the DL BWP1 used in the SCell to the DL BWP2 (S11). Subsequently, the terminal 200 suspends the transmission of the uplink signal using the PUSCH configured in the SCell (S13).

In S13, the terminal 200 stops or holds the transmission of the uplink signal using the PUSCH configured in the SCell.

In S13, the terminal 200 may suspend, stop, or hold the transmission of the uplink signal for each channel, instead of suspending the transmission of the uplink signal using the PUSCH.

In S13, the terminal 200 may consider that a time alignment (TA) timer related to the SCell expires or has expired, instead of suspending the transmission of the uplink signal using the PUSCH,.

Thus, when the terminal 200 performs the switching of the DL BWP in the SCell, the transmission of the uplink signal in the SCell is suspended. In this case, the terminal 200 may perform the transmission of the uplink signal in another cell (for example, SpCell or another SCell). Note that when the terminal 200 performs the switching of the DL BWP in the SCell, the transmission of the uplink signal in the SCell may be suspended after the predetermined period elapsed.

### (3.1.2) Operation example 2

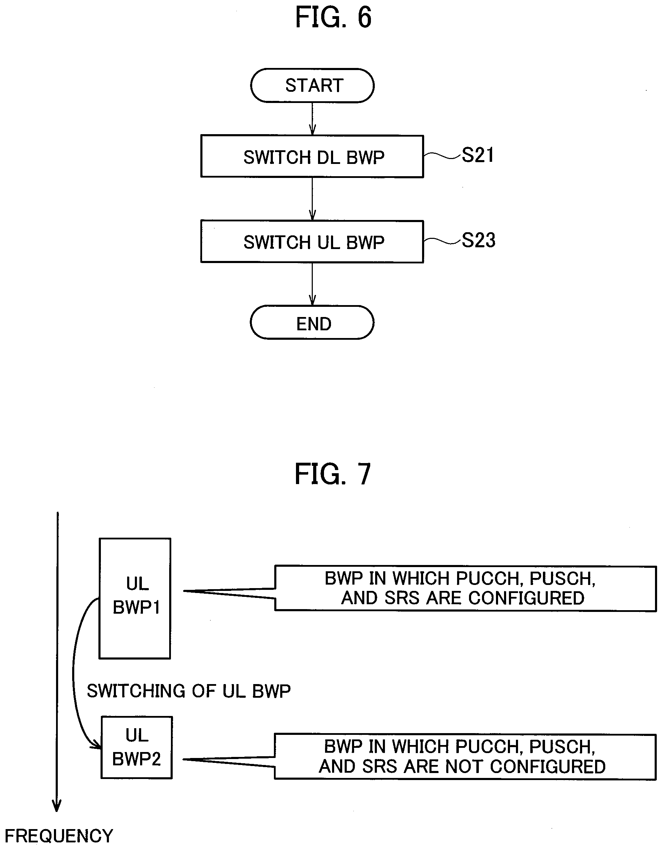

Fig. 6 is a diagram illustrating an operation flow of the terminal 200 according to operation example 2 when the uplink transmission is suspended. As illustrated in Fig. 6, the terminal 200 switches the DL BWP1 used in the SCell to the DL BWP2 (S21). Subsequently, the terminal 200 performs the switching of the uplink partial bandwidth UL BWP used in the SCell (S23).

Fig. 7 is a diagram for explaining the switching of the UL BWP in the dormant state. As illustrated in Fig. 7, the terminal 200 switches the uplink partial bandwidth UL BWP1 used in the SCell to the UL BWP2 (also referred to as dormant UL BWP) in which the uplink channel is not configured.

For example, the terminal 200 may switch the UL BWP1 used in the SCell to the UL BWP2 in which at least one of the PUSCH, the PUCCH, and the SRS is not configured. Note that in the present embodiment, at least PUSCH is not configured in the UL BWP2.

The terminal 200 may select a BWP having predetermined information as the dormant UL BWP, and ignore a part of the content, a channel, or a signal (for example PDCCH, PUCCH, or SRS) configured in the BWP. Examples of the predetermined information include information associated with the BWP such as a BWP index or a PRB index.

Thus, when the terminal 200 performs the switching of the DL BWP in the SCell, the switching of the UL BWP is performed. In this case, the switching of the UL BWP is linked with the switching of the DL BWP. Note that when the terminal 200 performs the switching of the UL BWP in the SCell, the switching of the DL BWP may be performed.

The dormant DL BWP and the dormant UL BWP may be associated by predetermined information. Examples of the predetermined information include association information such as a BWP index or a frequency which is notified by an RRC message. Such association is applicable to a case where the same BWP is always used in the downlink and the uplink, such as time division (TDD).

When the terminal 200 refers to the RRC message and performs the configuration of the dormant DL BWP and the dormant UL BWP, the radio base station 100 configures only genericParameters in the BWP-DownlinkCommon and BWP-UplinkCommon parameters of the RRC message, and therefore all physical channels are not necessarily configured. Note that the radio base station 100 configures the RRC message so that the terminal 200 performs quality measurement by referring to the dormant BWP with CSI-MeasConfig in the RRC message.

### (3.1.3) Operation example 3

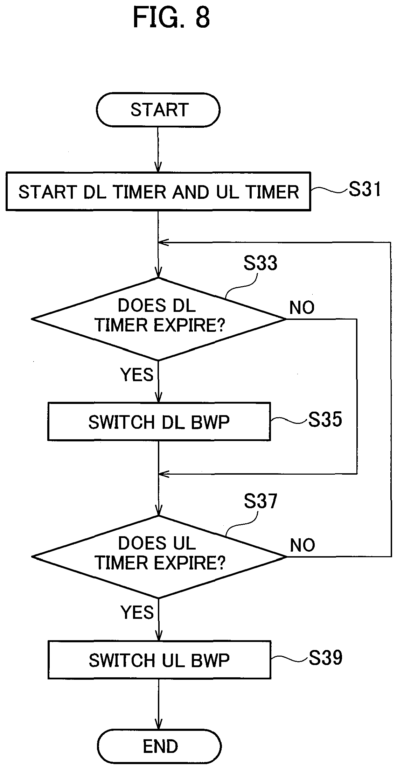

Fig. 8 is a diagram illustrating an operation flow of the terminal 200 according to operation example 3 when the uplink transmission is suspended. As illustrated in Fig. 8, the terminal 200 starts the downlink (DL) timer in the DL BWP1, and starts the uplink (UL) timer in the UL BWP1 (S31). These timers are started independently.

The terminal 200 determines whether or not the DL timer expires (S33). For example, the DL timer expires when no data is received for a predetermined period. If the DL timer expires, the terminal 200 switches the DL BWP1 to the DL BWP2 (S35, see Fig. 3). On the other hand, if the DL timer does not expire, a process proceeds to S37.

Subsequently, the terminal 200 determines whether or not the UL timer expires (S37). For example, the UL timer expires when no data is transmitted for a predetermined period. If the UL timer expires, the terminal 200 switches the UL BWP1 to the UL BWP2 (S39, see Fig. 7). On the other hand, if the DL timer does not expire, a process returns to S33.

Note that in Fig. 8, the processing of S37 and S39 may be performed before the processing of S33 and S35. Further, the processing of S33 and S35 and the processing of S37 and S39 may be performed in separate flows.

In this way, in the SCell, the switching of the UL BWP is performed independent from the switching of the DL BWP. Note that the terminal 200 may individually perform the switching of the UL BWP and the switching of the DL BWP based on an instruction from the radio base station 100.

### (3.1.4) Others

When the terminal 200 changes the uplink partial bandwidth UL BWP1 used in the SCell to the partial bandwidth in which no uplink channel is configured, the terminal 200 may erase, deactivate, release, or ignore the resource for use in the transmission of the uplink signal configured in the UL BWP1.

For example, in the UL BWP1, the terminal 200 may erase the configured grant. Further, in the UL BWP1, the terminal 200 may release the PUCCH. Further, the terminal 200 may adopt different control for each resource and change the UL BWP1 to the partial bandwidth in which the uplink channel is not configured.

### (3.2) Performing of uplink transmission

In the dormant state, the terminal 200 performs the transmission of the uplink signal (specific uplink signal) using the Scell. In the present embodiment, the terminal 200 transmits the uplink signal using the PUSCH allocated in advance by the configured grant in the SCell.

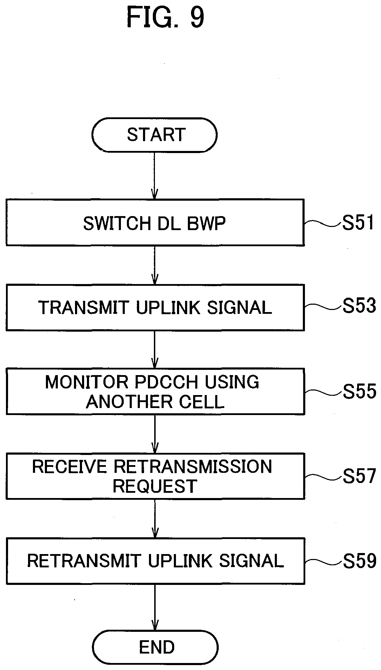

Fig. 9 is a diagram illustrating an operation flow of the terminal 200 when the uplink transmission is performed. As illustrated in Fig. 9, the terminal 200 switches the DL BWP1 used in the SCell to the DL BWP2 (S51). Subsequently, the terminal 200 transmits the uplink signal to the radio base station 110 using the PUSCH allocated by the configured grant (S53).

The terminal 200 monitors the PDCCH for a predetermined period with the partial bandwidth BWP configured in another cell in which the PDCCH is configured (S55). When receiving the retransmission request for the uplink signal from the radio base station 110 using another cell (S57), the terminal 200 retransmits the uplink signal using the PUSCH based on the retransmission request (S59).

When the radio base station 110 receives the uplink signal from the terminal 200 and detects an error or the like in the uplink signal, the radio base station 110 transmits the retransmission request for the uplink signal to the terminal 200 using another cell.

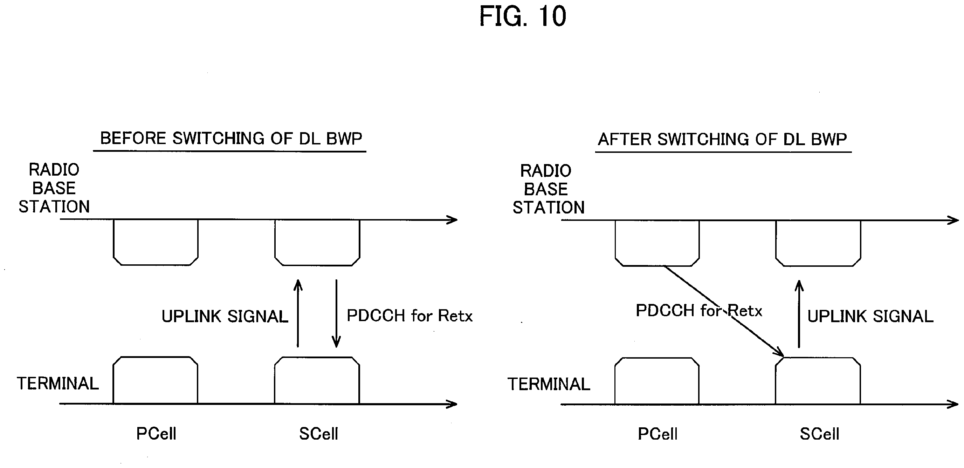

Fig. 10 is a diagram for explaining the reception of the retransmission request in the dormant state. As illustrated in Fig. 10, before the switching of the DL BWP is performed in the SCell, the terminal 200 monitors the PDCCH for a predetermined period using the SCell. On the other hand, after the DL BWP is switched in the SCell, the terminal 200 monitors the PDCCH for a predetermined period using another cell (for example, PCell).

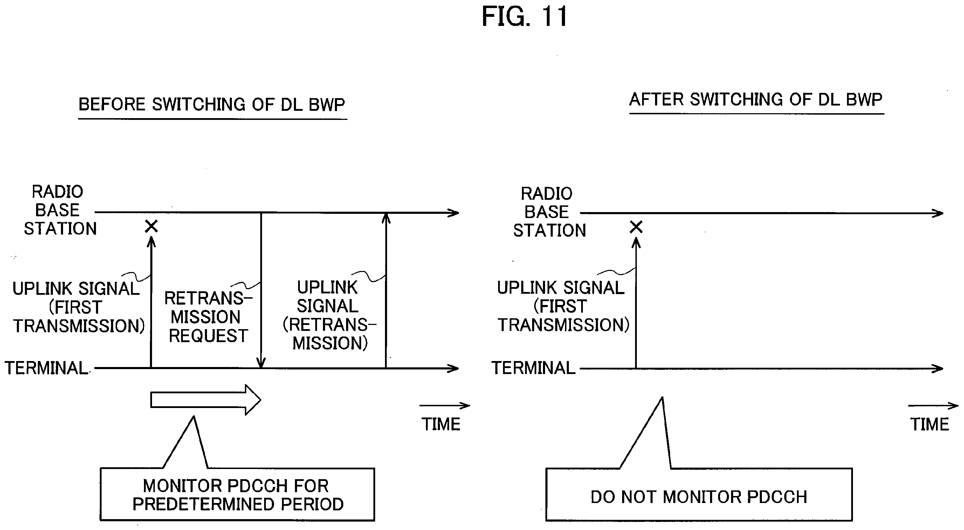

Fig. 11 is a diagram for explaining the operation of the terminal 200 in the dormant state according to a comparative example. As illustrated in Fig. 11, before the switching of the DL BWP is performed in the SCell (that is, before transitioning to the dormant state), the terminal 200 monitors the PDCCH for a predetermined period using the SCell. Therefore, the terminal 200 can receive the retransmission request from the radio base station 110. In this case, the terminal 200 retransmits the uplink signal to the radio base station 110.

On the other hand, after the switching of the DL BWP is performed in the SCell (that is, after transitioning to the dormant state), the terminal 200 does not monitor the PDCCH using the SCell. In the comparative example, the terminal 200 does not also monitor the PDCCH using another cell (for example, PCell). For this reason, in the comparative example, the terminal 200 cannot receive the retransmission request from the radio base station 110. In this case, there is a possibility that the state mismatch in the transmission results occurs between the terminal and the radio base station.

Note that the radio base station 110 may notify the terminal 200 of the information on another cell in which the retransmission request is transmitted, in advance. In addition, the terminal 200 may notify the radio base station 110 of the information on another cell in which the PDCCH is monitored, in advance.

After the DL BWP is switched in the SCell, the cell in which the terminal 200 monitors the PDCCH may be the PSCell, the predetermined Scell, or the like in addition to the PCell. Examples of the predetermined cell include a cell designated from the radio base station 110, a cell having a predetermined index (for example, cell index, ServCell Index, BWP index), and the like. Examples of the predetermined index include a maximum index or a minimum index.

The monitoring of the PDCCH using another cell may be limited to a case where the configured grant is configured in the SCell.

On the other hand, when the configured grant is invalidated, for example, when the configured grant is erased, deactivated, released, or the like, the terminal 200 may not monitor the PDCCH using another cell.

In addition, when the transmission using the configured grant is not performed for a predetermined period, the terminal 200 may not monitor the PDCCH using another cell.

When the dormant DL BWP is configured in the SCell, it may be configured so that the configured grant cannot be configured.

When the radio base station 110 uses the dormant DL BWP, it may be ensured that the configured grant is erased, deactivated, released, or the like.

### (3.3) Other Operations

The terminal 200 may notify the radio base station 100 of the capability for the DL BWP and the capability for the UL BWP. In this case, the capability for the DL BWP may be different from the capability for the UL BWP.

When the dormant BWP is supported in the SpCell, the dormant state may also be applied to the SpCell in addition to the SCell. In addition, like SUL (Suplimental UL), when a plurality of ULs are configured for one DL, the operation may be applied to only one of the plurality of ULs (for example, SUL or normal UL (non-SUL), or one that NW designates).

### (4) Action and Effect

According to the embodiment described above, in the dormant state where the PDCCH is not monitored at least in the cell, the terminal 200 suspends the transmission of the specific uplink signal using the cell in which the dormant state is configured.

With such a configuration, in the dormant state, the terminal 200 does not transmit the specific uplink signal using the cell in which the dormant state is configured. Accordingly, the terminal 200 can avoid the state mismatch in the transmission results of the specific uplink signal between the radio base station and the terminal.

In addition, with such a configuration, the battery consumption of the terminal 200 can be saved.

According to the present embodiment, in the dormant state, the terminal 200 switches the UL BWP used in the cell, in which the dormant state is configured, to the dormant UL BWP in which the uplink channel is not configured.

With such a configuration, the terminal 200 can easily suspend the transmission of the uplink signal.

According to the present embodiment, in the dormant state, when the terminal 200 switches the DL BWP used in the cell, in which the dormant state is configured, to the dormant DL BWP in which the PDCCH is not configured, the terminal 200 switches the UL BWP to the dormant UL BWP.

With such a configuration, since the switching of the UL BWP can be performed in association with the switching of the DL BWP, it is possible to reliably avoid the state mismatch in the transmission results of the specific uplink signal between the radio base station and the terminal and reliably save the battery consumption of the terminal 200.

According to the present embodiment, in the dormant state where the PDCCH is not monitored at least in the cell, the terminal 200 configures another cell in which the terminal 200 monitors the PDCCH, and receives the retransmission request for the specific uplink signal using another cell in which the terminal 200 monitors the PDCCH.

With such a configuration, the terminal 200 can determine that the radio base station 110 has not correctly received the specific uplink signal to retransmit the specific uplink signal. Accordingly, the terminal 200 can avoid the state mismatch in the transmission results of the specific uplink signal between the radio base station and the terminal.

### (5) Other Embodiments

The contents of the present invention have been described above according to the embodiments, but the present invention is not limited to these descriptions, and it is obvious to those skilled in the art that various modifications and improvements can be made thereto.

The block configuration diagram (Fig. 4) used for explaining the above-descried embodiments illustrates blocks of functional unit. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is referred to as a transmitting unit or a transmitter. For any of the above, as explained above, the realization method is not particularly limited to any one method.

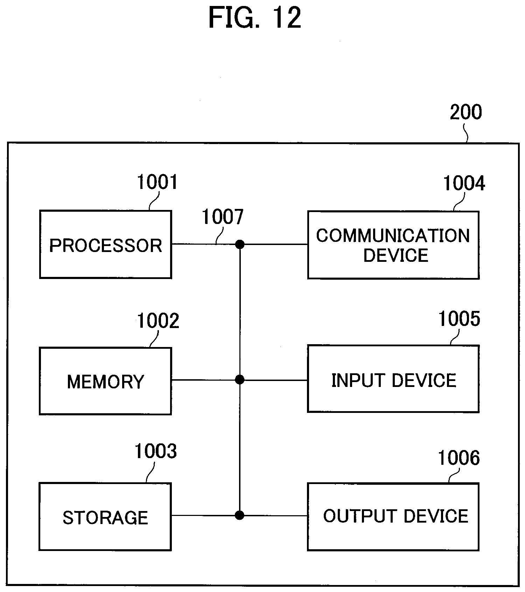

Furthermore, the terminal 200 explained above may function as a computer that performs the processing of the radio communication method of the present disclosure. Fig. 12 is a diagram illustrating an example of a hardware configuration of the terminal. As illustrated in Fig. 12, the terminal can be configured as a computer device including a processor 1001, a memory 1002, a storage 1003, a communication device 1004, an input device 1005, an output device 1006, a bus 1007, and the like

Furthermore, in the following explanation, the term "device" can be replaced with a circuit, device, unit, and the like. A hardware configuration of the device may be constituted by including one or plurality of the devices illustrated in the figure, or may be constituted without including some of the devices.

The functional blocks of the device are realized by any of hardware elements of the computer device or a desired combination of the hardware elements.

Moreover, the processor 1001 performs operation by loading a predetermined software (program) on hardware such as the processor 1001 and the memory 1002, and realizes various functions of the device by controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, an operation device, a register, and the like.

Moreover, the processor 1001 reads a program (program code), a software module, data, and the like from at least one of the storage 1003 and the communication device 1004 into the memory 1002, and executes various processing according to them. As the program, a program that is capable of executing on the computer at least a part of the operation explained in the above embodiments, is used. Alternatively, various processing explained above may be executed by one processor 1001 or may be executed simultaneously or sequentially by two or more processors 1001. The processor 1001 may be implemented by using one or more chips. Alternatively, the program may be transmitted from a network via a telecommunication line.

The memory 1002 is a computer readable recording medium and may be configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic stripe, and the like. The storage 1003 may be called an auxiliary storage device. The recording medium can be, for example, a database including at least one of the memory 1002 and the storage 1003, a server, or other appropriate media.

The communication device 1004 is hardware (transmission and reception device) capable of performing communication between computers via at least one of a wired network and a wireless network. The communication device 1004 is also called, for example, a network device, a network controller, a network card, a communication module, and the like.

The communication device 1004 may include a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information therebetween. The bus 1007 may be constituted by a single bus or may be constituted by separate buses between the devices.

Further, the device may be configured to include hardware such as a microprocessor, Digital Signal Processor (DSP), Application Specific Integrated Circuit (ASIC), Programmable Logic Device (PLD), and Field Programmable Gate Array (FPGA) . Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB) and System Information Block (SIB)), other signals, or a combination of these. The RRC signaling may be called RRC message, for example, or may be RRC Connection Setup message, RRC Connection Reconfiguration message, or the like.

Each of the above aspects/embodiments may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input and output information can be stored in a specific location (for example, a memory) or may be managed in a management table. The information to be input and output can be overwritten, updated, or added. The information may be deleted after outputting. The inputted information may be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, and it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

Note that the terms described in the present disclosure and terms necessary for understanding the present disclosure may be replaced by terms having the same or similar meanings. For example, at least one of a channel and a symbol may be a signal (signaling). Also, a signal may be a message. Further, a component carrier (CC) may be referred to as a carrier frequency, a cell, a frequency carrier, or the like.

The terms "system" and "network" used in the present disclosure can be used interchangeably.

Furthermore, the information, the parameter, and the like explained in the present disclosure may be represented by an absolute value, may be expressed as a relative value from a predetermined value, or may be represented by corresponding other information. For example, the radio resource may be indicated by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that perform the communication service in this coverage.

In the present disclosure, the terms "mobile station (MS)", "user terminal", "user equipment (UE)", "terminal" and the like can be used interchangeably.

The mobile station may be called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be replaced as a mobile station (user terminal, hereinafter the same applies). For example, each of the aspects/embodiments of the present disclosure may be applied to a configuration that allows communication between a base station and a mobile station to be replaced with communication between a plurality of mobile stations (which, may be referred to as, for example, Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be replaced as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, and printed electrical connections, and as some non-limiting and non-exhaustive examples, by using electromagnetic energy having wavelengths in the radio frequency region, the microwave region, and light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in the present disclosure, these articles may include a plurality of nouns following these articles.

In the present disclosure, the term "A and B are different" may mean "A and B are different from each other". Note that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### INDUSTRIAL APPLICABILITY

As described above, in the dormant state, the terminal can avoid the state mismatch in the transmission results of the specific uplink signal between the terminal and the radio base station, and therefore, is useful.

### EXPLANATION OF REFERENCE NUMERALS

- 10: radio communication system
- 100: radio base station
- 110: radio base station
- 200: terminal
- 210: transmitting unit
- 220: receiving unit
- 230: timer
- 240: cell information holding unit
- 250: control unit
- 1001: processor
- 1002: memory
- 1003: storage
- 1004: communication device
- 1005: input device
- 1006: output device
- 1007: bus

## Claims

1. A terminal comprising:
a control unit that controls to a dormant state in which monitoring of a downlink control channel is not performed at least in a cell,
wherein the control unit suspends transmission of a specific uplink signal using the cell in the dormant state.

2. The terminal according to claim 1, wherein in the dormant state, the control unit switches an operation bandwidth of the terminal in an uplink used in the cell to an operation bandwidth width in which an uplink channel is not configured.

3. The terminal according to claim 2, wherein in the dormant state, the control unit performs the switching of the operation bandwidth of the terminal in the uplink when an operation bandwidth of the terminal in a downlink used in the cell is switched to an operation bandwidth in which the downlink control channel is not configured.

4. A terminal comprising:
a transmitting unit that transmits a specific uplink signal using a cell in a dormant state in which monitoring of a downlink control channel is not performed at least in the cell;
a control unit that configures another cell in which the terminal monitors a downlink control channel; and
a receiving unit that receives a retransmission request for the specific uplink signal using the another cell.
